# EUROPEAN PATENT SPECIFICATION

(11) **EP 0 275 129 B1**
(45) Date of publication and mention of the grant of the patent: **06.04.1994**
(21) Application number: 88200011.0
(22) Date of filing: 07.01.1988
(51) Int. Cl.: H04N 11/04, H04L 1/02

(54) **Information transmission system**
Nachrichtenübertragungssystem
Système de transmission d'informations

(30) Priority: 16.01.1987 BE 8700027
(43) Date of publication of application: 20.07.1988
(73) Proprietor: ALCATEL N.V., NL-1077 XX Amsterdam (NL); BELL TELEPHONE MANUFACTURING COMPANY Naamloze Vennootschap, B-2018 Antwerp (BE)
(72) Inventor: Verbiest, Willem Jules Antoine, B-2730 Zwijndrecht (BE); Duponcheel, Marc Maurice Lucienne, B-2619 Wilrijk (BE)
(74) Representative: Vermeersch, Robert

(56) References cited:
- EP-A- 0 230 338
- WO-A-86/04759
- US-A- 4 001 692
- IEEE TRANSACTIONS ON COMMUNICATIONS, vol. COM-31, no. 4, April 1983, pages 532-540, IEEE, New York, US; P.J. BURT et al.: "The Laplacian pyramid as a compact image code"
- PATENT ABSTRACTS OF JAPAN, vol. 5, no. 30 (E-47)[702], 24th February 1981 & JP-A-55 156 442

## Description

The present invention relates to an information transmission system including a transmitter station and a receiver station, said transmitter station including an information source producing a source signal, control circuits coupled to said source to generate from said source signal a plurality of encoded information signals, multiplexing means to multiplex at least said encoded information signals to thereby provide a multiplexed output signal and transmitter means to transmit said output signal to said receiver station wherein said encoded information signals are combined.

Such an information transmission system is already known from US patent US-A-4 001 692. Therein the information signals are mutually delayed versions of the source signal and are multiplexed together with this source signal. The multiplexed information signals normally contain identical information and are different only in case of error, this feature being exploited in the receiver station to provide an error free signal.

Drawbacks of the known transmission system are the introduction of a delay and the amount of redundant information transmitted. Especially the latter drawback makes this known transmission system unacceptable for video signal transmission because the information to be transmitted even without redundancy is then already very high.

An object of the present invention is to provide an information transmission system of the above type, but which does not present the above drawbacks.

According to the invention this object is achieved due to the fact that said source signal is a video image signal representative of a video image and is applied to said control circuits which are adapted to generate said encoded information signals from image characteristics of blocks of different dimensions of said video image and such that said encoded information signals concern versions with different accuracies of said image.

By the multiplexed transmission of the different image version defining information signals temporary loss of one of the signals will not considerably affect in an adverse way the quality of the resultant image built up in the receiver station from the information signals received. On the other hand, to reach this goal the amount of information transmitted is not delayed and is reduced when compared with a system wherein one would simply transmit the highest image accuracy version in a redundant way since the amount of information required to define lower image accuracy versions is also corrspondingly lower. Also the amount of information transmitted of each of the versions can be chosen in an optimal way in function of its accuracy.

It should be noted that the transmission of information signals which define versions of different accuracy of a same image and the combination of these signals in a receiving station are known per se from the article "Making progressive transmission adaptive" by W.D. Hofmann and D.E. Toxel, published in IEEE Transactions on communications, Vol. COM. 34, No 8, August 1986, pp. 806-813. But therein the information signals defining the different versions are transmitted one after the other and are not multiplexed and used in the receiver station to obtain an error free image.

Another characteristic feature of the present information transmission system is that said transmission means is adapted to assembles the information of said information signals via packets and to transmit them in an asynchronous way and on a time division basis to said receiver station.

In this way the loss of a packet of an information signal has substantially no adverse effect on the quality of the resultant image built up in the receiver station.

To be noted that the article "Asynchronous Time Division Networks : terminal synchronizing for video and sound signals, by J-Y Cochennec et al, Globecom '85, IEEE Global Telecommunications Conference, New Orleans, Louisiana, December 2-5, 1985, pp. 791-794" already describes an information transmission system wherein information signals are transmitted under the form of packets in an asynchronous way and on a time division basis. However, therein to compensate for the loss of packet a line of the video image affected by the packet loss is replaced by the same line of a previous image.

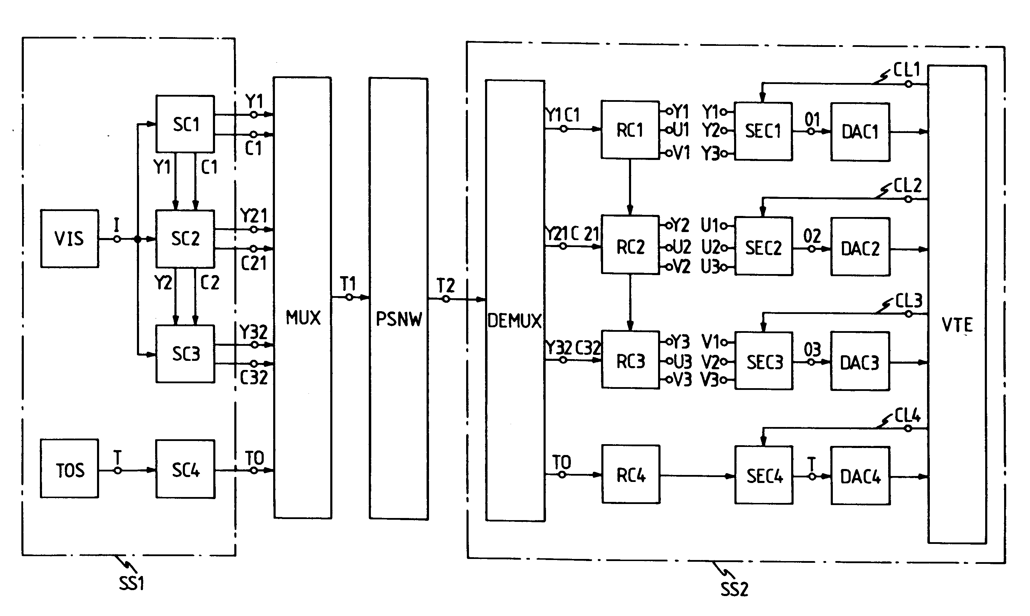

The above mentioned and other objects and features of the invention will become more apparent and the invention itself will be best understood by referring to the following description of an embodiment taken in conjunction with the accompanying drawing which represents a block diagram of an information transmission system according to the invention.

This system which is an asynchronous system operating on the basis of time division includes a packet switching network PSNW which is provided with a plurality of terminals, such as T1 and T2, with which user stations such as SS1 and SS2 are coupled. Ths network PSNW is for instance of the type described in Belgian patent application No 2/61131 corresponding to BE-A-905982 and is built up by means of switching elements such as described in Belgian patent BE-A-904100.

Each of the stations, such as SS1 and SS2, includes a transmission device and a receiving device, but in the drawing only the transmission device of station SS1 and the receiving device of station SS2 are shown.

The transmission device of station SS1 includes a video colour image source VIS and an associated tone source TOS. This video colour image source is for instance a video camera with which an image may be shot and which then provides at its output I a like named analog video colour image signal I. The tone source TOS associated to this camera provides at its output T a like named tone signal T associated to this video colour image.

The output I of VIS is connected in parallel to transmission circuits SC1, SC2 and SC3 which are of the type described in Belgian patent BE-A-904101. Such as disclosed therein a transmission circuit is able to first derive two coded information signals from the analog colour image signal I, provided by the source VIS, and to then transform these signals into two packet sets. The first information signal includes coded digital information concerning the mean luminance value of different blocks of the image, whilst the second information signal contains coded digital information concerning the mean chrominance value of these image blocks. More particularly, SC1, SC2 and SC3 produce luminance/chrominance information signals Y1, C1; Y2, C2 and Y3, C3 (not shown).

In this connection it should be noted that each luminance signal Y, i.e. Y1, Y2, Y3, is a linear combination of R (red), G (green) and B (blue) information signals and that each chrominance signal C, e.g. C1, C2, C3, is derived from the chrominance signals U, i.e. U1, U2, U3, and V, i.e. V1, V2, V3, which are given by the relations

$\text{U = Y - R}$
$\text{V = Y - B}$

The transmission circuits distinguish from each other in that the luminance information signals Y1, Y2, Y3 as well as the chrominance information signals C1, C2, C3 relate to blocks of different dimensions of the image. Indeed :
- the information signals Y1 and C1 relate to relatively larger image blocks, e.g. square blocks having an 8 mm side. They define the least accurate luminance and chrominance verion of the image respectively;
- the information signals Y2 and C2 relate to relatively smaller image blocks, e.g. square blocks having a 2 mm side. They define a more accurate luminance and chrominance version of the image respectively;
- the information signals Y3 and C3 relate to the pixels of the image and define the most accurate luminance and chrominance version of the image respectively.

The information signals Y1, Y2, Y3 and C1, C2, C3 could be transmitted as such, but to limit the quantity of information to be transmitted only the information signals Y1 and C1 are transformed into like named packet sets Y1 and C1 and :
- instead of transmitting the mean luminance signal Y2 of the smaller blocks the difference Y2-Y1 between this mean luminance signal Y2 and the mean luminance signal Y1 is transmitted. The same is true for the chrominance signal C2. In other words, in SC2 the information signals Y1 and C1 are used to form the information signals Y2-Y1 and C2-C1, as schematically indicated by the connections between SC1 and SC2. These signals are further transformed into respective packet sets Y21 and C21;
- instead of transmitting the mean luminance signal Y3 of the pixels, the difference Y3-Y2 between this mean luminance signal Y3 and the mean luminance signal Y2 is transmitted. The same is true for the chrominance signal C3. In other words, in SC3 the information signals Y2 and C2 are used to form the information signals Y3-Y2 and C3-C2, as is indicated by the connections between SC2 and SC3 . These signals are further transformed into respective packet sets Y32 and C32.

The output T of TOS is connected to the transmission circuit SC4 wherein the analog tone signal T provided by the source TOS is transformed into a packet set TO containing coded digital information concerning this tone signal.

In connection with the above it should be noted that the packet sets Y21, C21 and Y32, C32 may have a variable bit rate, whereas the packet sets Y1 and C1 have a constant bit rate so that synchronisation bits may be inserted in the packets of these sets. Moreover, this constant bit rate is relatively low due to the relatively lower accuracy of Y1 and C1. Also, as described in the Belgian patent BE-A-904 101, in defining the information signals Y2, C2, Y3, C3 the information contained in previous images is taken into account, but this is not done for Y1 and C1 because in this way in the receiving station a first image build-up may be performed.

The packet sets Y1, C1; Y21, C21; Y32, C32 and TO are applied to the like named inputs of a multiplexer unit MUX which is of the type described in the article "Techniques temporelles asynchrones et réseaux intégrés de vidéocommunications" published in the Second International Conference on new systems and services in telecommunication, November 16-18, 1983, Liège, Belgium, pp. G6.1-G6.7.

In this multiplexer unit the packets of the different packet sets are processed in an asynchronous way and on a time division multiplex basis and generated as a single packet stream at the output T1 of the unit. This output constitutes the output of the station SS1 and is connected to the like named terminal T1 of the packet switching network PSNW.

As described in Belgian patents BE-A-904101 and BE-A-904100 the switching network transmits the packet stream to one or more of the user stations, for instance to the user station SS2 connected to terminal T2 of PSNW.

This station includes a demultiplexer unit DEMUX wherein the packet stream supplied to this terminal is split up in the packet streams Y1C1 Y21C21, Y32C32 and TO which appear on the like named outputs Y1C1, Y21C21, Y32C32 and TO of this demultiplexer unit DEMUX. They are then respectively supplied to the receiver circuits RC1, RC2, RC3 and RC4, wherein RC1, RC2 and RC3 are for instance of the type described in the above mentioned Belgian patent BE-A-904 101. As described therein, such a receiver circuit is able to split up the luminance and chrominance packet stream which is applied to its input, in a digital luminance signal and two digital chrominance signals. More particularly, in RC1, RC2 and RC3 the respective input packet streams Y1C1; Y2C2 and Y32C32 are split up in the respective packet sets Y1, U1, V1; Y21, U21, V21 and Y32, U32, V32. The digital information signals included therein are further derived from these packet sets. For simplicity reasons, these information signals are indicated by the same references as these packet sets. Hereby $\text{Y21 = Y2 - Y1}$ , $\text{U21 = U2 - U1}$ and $\text{V21 = V2 - V1}$ 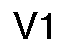 and $\text{Y32 = Y3 - Y2}$ , $\text{U32 = U3 - U2}$ and $\text{V32 = V3 - V2}$ 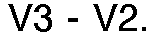 .

The information signals Y1, U1, V1 appear at the like named outputs of the transmitter circuit RC1, whereas in the receiver circuits RC2 and RC3 use is made of the connections with the circuits RC1 and RC2 to recover the original information signals Y2, U2, V2 and Y3, U3, V3 from the last mentioned signals. More particularly, there is proceeded as follows :
- in the receiver circuit RC2, $\text{Y21 = Y2 - Y1}$ is combined ( $\text{Y21 + Y1 = Y2}$ ) with Y1 in such a manner that the digital luminance signal Y2 is generated on the like named output Y2. The same happens with U21 and U1 and with V21 and V1, the information signals U2 and V2 being generated on like named outputs of RC2;
- in the receiver circuit RC3, $\text{Y32 = Y3 - Y2}$ is combined ( $\text{Y32 + Y2 = Y3}$ ) with Y2 in such a way that the digital luminance signal Y3 is generated on the like named output Y3. The same happens with U32 and U2 and with V32 and V2, the information signals U32 and V32 appearing at like named outputs of RC3.

The above mentioned luminance and chrominance signals Y1, Y2, Y3; U1, U2, U3 and V1, V2, V3 are supplied to like named inputs of respective selection circuits SEC1, SEC2 and SEC3 which controlled from the image receiving equipment VTE, as schematically indicated by the connections CL1, CL2 and CL3 between VTE and these selection circuits. By means of these connections VTE can control the selection circuits SEC1, SEC2 and SEC3 in such a manner that in VTE a black/white image or a colour image having one out of three accuraries is formed. More particularly :
- by means of SEC1 one the digital luminance signals Y1, Y2, Y3 defining different versions of a black/white image may be selected. This selected signal appears at the output O1;
- by means of SEC1, SEC2 and SEC3 one of the groups of luminance and chrominance signals Y1, U1, V1; Y2, U2, V2; Y3, U3, V3 which define different versions of a colour image may be selected. This selected group of signals then appears on the output O1, O2, O3.

The last mentioned outputs O1, O2 and O3 are connected to the receiving equipment VTE via the digital-to-analog converters DAC1, DAC2 and DAC3. In these converters the digita luminance and chrominance signals applied thereat are converted into analog signals and in VTE a black/white or colour image is then formed with these signals.

The packet set TO which is generated at the output of the demultiplexer unit DEMUX is converted in RC4 to a digital tone signal T and this signal is supplied to a digital-to-analog converter DAC4 via a selection circuit SEC4 controller by VTE. The signal applied thereon is converted therein to an analog signal which is also supplied to the equipment VTE.

In connection with the above it should be noted that because in the station SS2 the information signals Y2 and Y3 are recovered by combining the information signals Y21 and Y32 with Y1 and Y2 respectively, the consequence of the loss of a packet in the corresponding packet set Y21 and Y32 is that at this moment the information signal Y1 or Y2 instead of Y21 or Y32 is present. In other words, the information of higher accuracy Y21 or Y32 is replaced by the information of lower accuracy Y1 or Y2 which is then available.

Hence, the loss of a packet of a packet set has substantially no influence on the quality of the black/white or colour image which is realised in the station SS2 by means of the signals Y2, Y3; U2, U3; V2, V3. However, this is not true for the black/white or colour image which is realised by means of the information signals Y1, U1, V1. But, the probability of loosing a packet in each of the packet sets Y1 and C1, and therefore of information in Y1, U1, V1, is a minimum because, as mentioned above, the bit rate of these sets is relatively low.

It should be noted that because the information signals Y1, U1, V1 are not built-up by means of information of previous images a fast image build-up by means of these signals is assured. This is useful for the user. The relatively inaccurate image thus obtained is afterwards improved by means of more accurate information.

## Claims

1. Information transmission system including a transmitter station (SS1) and a receiver station (SS2), said transmitter station (SS1) including an information source (VIS) producing a source signal (I), control circuits (SC1/3) coupled to said source (VIS) to generate from said source signal a plurality of encoded information signals (Y1, C1; Y2, C2; Y3, C3; Y21, C21; Y32, C32), multiplexing means (MUX) to multiplex at least said encoded information signals to thereby provide a multiplexed output signal (T1) and transmitter means (PSNW) to transmit said output signal (T1) to said receiver station (SS2) wherein said encoded informations signals are combined, characterized in that said source signal is a video image signal (I) representative of a video image and is applied to said control circuits (SC1/3) which are adapted to generate said encoded information signals from image characteristics of blocks of different dimensions of said video image and such that said encoded information signals concern versions (Y1, C1; Y2, C2; Y3, C3; Y21, C21; Y32, C32) with different accuracies of said image.

2. Information transmission system according to claim 1, characterized in that said image characteristics are the mean luminance/chrominance values of said blocks.

3. Information transmission system according to claim 1, characterized in that at least a number (SC2/3) of control circuits (SC1/3) are also adapted to build up said encoded information signals (Y21, C21; Y32, C32) from those (Y1, C1; C2, C2; Y3, C3) defining versions of lower (Y1, C1; Y2, C2) and higher (Y2, C2; Y3, C3) accuracies of said image.

4. Information transmission system according to claim 3, characterized in that one (SC1) of said control circuits (SC1/3) is adapted to apply an encoded information signal (Y1, C1) defining a version with a lower image accuracy to said multiplexing means (MUX), whilst the control circuits of said number (SC2/3) are adapted to apply said built-up encoded information signals to said multiplexing means (MUX).

5. Information transmission system according to claims 2 and 3, characterized in that said built-up encoded information signals contain information indicating the difference between the mean luminance/chrominance values of said version of lower and higher accuracies of said image.

6. Information transmission system according to claim 1, characterized in that said transmission means (PSNW) assembly is adapted to the information of said information signals via packets and to transmit them in an asynchronous way and on a time division basis to said receiver station (SS2).

7. Information transmission system according to claims 4 and 6, characterized in that the information is constituted by bits and that said information signal (Y1, C1) provided by said one control circuit (SC1) has a constant bit rate.

8. Information transmission system according to claim 7, characterized in that said information signal (Y1, C1) provided by said one control circuit (SC1) includes synchronisation signals.

9. Information transmission system according to claim 5, characterized in that said receiver station (SS2) includes:
- receiving means (RC1/3) for deriving from said encoded information signals multiplexed in said output signal (T1) a first set of luminance signals (Y1, Y2, Y3) and second (U1, U2, U3) and third (V1, V2, V3) sets of chrominance signals;
- selection means (SEC1/3) coupled to said receiving means (RC1/3) and to a combining means (VTE) for transferring to said combining means selected signals of said (Y1, Y2, Y3; U1, U2, U3; V1, V2, V3) sets to enable said combining means to provide a black and white image as well as different accuracy versions of a colour image.

## Patentansprüche

1. Informationsübertragungssystem, das eine Sendestation (SS1) und eine Empfangsstation (SS2) enthält, wobei die Sendestation (SS1) eine Informationsquelle (VIS), die ein Ursprungssignal (I), erzeugt, und Steuerschaltkreise (SC1/3), die an die Informationsquelle (VIS) gekoppelt sind, um aus dem Ursprungssignal eine Vielzahl von codierten Informationssignalen (Y1, C1; Y2, C2; Y3, C3; Y21, C21; Y32, C32) zu erzeugen, hat, und das Mittel zum Multiplexen (MUX), um mindestens die codierten Informationssignale gleichzeitig zu senden, um dadurch ein Multiplex-Ausgangssignal (T1) zu erzeugen, und Mittel zum Senden (PSNW), um das Ausgangssignal (T1) zu der Empfangsstation (SS2) zu senden, in der die codierten Informationssignale vereinigt werden, hat,
**dadurch gekennzeichnet,** daß das Ursprungssignal ein Videobildsignal (I) ist, das ein Videobild darstellt, und daß das Ursprungssignal den Steuerschaltkreisen (SC1/3) zugeführt wird, die so angepaßt sind, daß sie die codierten Informationssignale aus Bildcharakteristiken von Blöcken von verschiedenen Dimensionen des Videobildes erzeugen, so daß die codierten Informationssignale Versionen (Y1, C1; Y2, C2; Y3, C3; Y21, C21; Y32, C32) mit verschiedenen Genauigkeiten des Bildes betreffen.

2. Informationsübertragungssystem nach Anspruch 1,
dadurch gekennzeichnet, daß die Bildcharakteristiken die mittleren Luminanz/Chrominanz-Werte dieser Blöcke sind.

3. Informationsübertragungssystem nach Anspruch 1,
dadurch gekennzeichnet, daß mindesten eine Anzahl (SC2/3) von Steuerschaltkreisen (SC1/3) ebenfalls angepaßt sind, um die Informationssignale (Y21, C21; Y32, C32) aus denen (Y1, C1; Y2, C2; Y3, C3) zusammenzusetzen, die Versionen von niedriger (Y1, C1; Y2, C2) und höherer (Y2, C2; Y3, C3) Genauigkeit des Bildes festlegen.

4. Informationsübertragungssystem nach Anspruch 3,
dadurch gekennzeichnet, daß einer (SC1) der Steuerschaltkreise (SC1/3) angepaßt ist, um ein codiertes Informationssignal (Y1, C1), das eine Version mit einer niedrigeren Bildgenauigkeit festlegt, den Mitteln zum Multiplexen (MUX) zuzuführen, während die Anzahl (SC2/3) der Steuerschaltkreise angepaßt ist, um die zusammengesetzten codierten Informationssignale den Mitteln zum Multiplexen (MUX) zuzuführen.

5. Informationsübertragungssystem nach den Ansprüchen 2 und 3,
dadurch gekennzeichnet, daß die zusammengesetzten codierten Informationssignale Information beinhalten, die die Differenz zwischen den mittleren Luminanz/Chrominanz-Werten der Version der niedrigeren und höheren Genauigkeit des Bildes angeben.

6. Informationsübertragungssystem nach Anspruch 1,
dadurch gekennzeichnet, daß die Mittel zum Übertragen (PSNW) angepaßt sind, um die Information des Informationssignals zu Paketen zusammenzufassen und um diese auf eine asynchrone Weise im Zeitmultiplex-Verfahren zu der Empfangsstation (SS2) zu übertragen.

7. Informationsübertragungssystem nach den Ansprüchen 4 und 6,
dadurch gekennzeichnet, daß die Information aus Bits besteht und
daß das Informationssignal (Y1, C1), das von dem Steuerschaltkreis (SC1) kommt, eine konstante Bitrate hat.

8. Informationsübertragungssystem nach Anspruch 7,
dadurch gekennzeichnet, daß das Informationssignal (Y1, C1), das von dem Steuerschaltkreis (SC1) kommt, Synchronisationssignale einschließt.

9. Informationsübertragungssystem nach Anspruch 5,
dadurch gekennzeichnet, daß die Empfangsstation (SS2) enthält:
- Mittel zum Empfangen (RC1/3), um von dem codierten Informationssignal, das in das Ausgangssignal (T1) eingefügt ist, eine erste Gruppe von Luminanz-Signalen (Y1, Y2, Y3) und zweite (U1, U2, U3) und dritte Gruppe (V1, V2, V3) von Chrominanz-Signalen abzuleiten;
- Mittel zum Auswählen (SEC1/3), die mit den Mitteln zum Empfangen (RC1/3) und mit Mitteln zum Verbinden (VTE) verbunden sind, um den Mitteln zum Verbinden ausgewählte Signale der Gruppen (Y1, Y2, Y3; U1, U2, U3; V1, V2, V3) zu übergeben, um es diesen Mitteln zum Verbinden zu ermöglichen, ein Schwarz/Weiß-Bild genauso gut wie Versionen unterschiedlicher Genauigkeit eines Farbbildes zu liefern.

## Revendications

1. Système de transmission d'information, incluant une station d'émission (SS1) et une station de réception (SS2), ladite station d'émission (SS1) incluant une source d'information (VIS) produisant un signal de source (I), des circuits de commande (SC1/3) couplés à ladite source (VIS) pour engendrer, à partir dudit signal de source, une pluralité de signaux d'information codés (Y1, C1; Y2, C2; Y3, C3; Y21, C21; Y32, C32), des moyens de multiplexage (MUX) pour multiplexer au moins lesdits signaux d'information codés et produire ainsi un signal de sortie multiplexé (T1) et des moyens de transmission (PSNW) pour transmettre ledit signal de sortie (T1) à ladite station de réception (SS2), dans laquelle lesdits signaux d'information codés sont combinés, caractérisé en ce que ledit signal de source est un signal image vidéo (I) représentatif d'une image vidéo et il est appliqué auxdits circuits de commande (SC1/3) qui sont adaptés pour engendrer lesdits signaux d'information codés à partir des caractéristiques d'image de blocs de différentes dimensions de ladite image vidéo et sont tels que lesdits signaux d'information codés concernent des versions (Y1, C1; Y2, C2; Y3, C3; Y21, C21; Y32, C32) de différentes précisions de ladite image.

2. Système de transmission d'information conforme à la revendication 1, caractérisé en ce que lesdites caractéristiques d'image sont les valeurs moyennes de luminance/chrominance desdits blocs.

3. Système de transmission d'information conforme à la revendication 1, caractérisé en ce que au moins certains (SC2/3) des circuits de commande (SC1/3) sont également adaptés pour constituer lesdits signaux d'information codés (Y21, C21; Y32, C32) à partir de ceux (Y1, C1; Y2, C2; Y3, C2) qui définissent des versions de précisions plus faible (Y1, C1; Y2, C2) et plus élevées (Y2, C2; Y3, C3) de ladite image.

4. Système de transmission d'information conforme à la revendication 3, caractérisé en ce que l'un (SC1) desdits circuits de commande (SC1/3) est adapté pour appliquer un signal d'information codé (Y1, C1) définissant une version à précision d'image plus faible auxdits moyens de multiplexage (MUX), tandis que lesdits certains circuits de commande (SC2/3) sont adaptés pour appliquer lesdits signaux d'information codés constitués auxdits moyens de multiplexage (MUX).

5. Système de transmission d'information conforme aux revendications 2 et 3, caractérisé en ce que lesdits signaux d'information codés constitués contiennent de l'information indiquant la différence entre les valeurs moyennes de luminance/chrominance desdits versions de ladite image de précisions plus faible ou plus élevée.

6. Système de transmission d'information conforme à la revendication 1, caractérisé en ce que lesdits moyens de transmission (PSNW) sont adaptés pour assembler l'information desdits signaux d'information en paquets et pour les transmettre de façon asynchrone et selon un mode de partage de temps, jusqu'à ladite station de réception (SS2).

7. Système de transmission d'information conforme aux revendications 4 et 6, caractérisé en ce que l'information est constituée de bits et en ce que ledit signal d'information (Y1, C1) fourni par ledit un circuit de commande (SC1) a un débit binaire constant.

8. Système de transmission d'information conforme à la revendication 7, caractérisé en ce que ledit signal d'information (Y1, C1) fourni par ledit un circuit de commande (SC1) inclut des signaux de synchronisation.

9. Système de transmission d'information conforme à la revendication 5, caractérisé en ce que ladite station de réception (SS2) inclut:
- des moyens de réception (RC1/3), pour dériver desdits signaux d'information codés multiplexés dans ledit signal de sortie (T1) un premier ensemble de signaux de luminance (Y1, Y2, Y3) et des deuxième (U1, U2, U3) et troisième (V1, V2, V3) ensembles de signaux de chrominance;
- des moyens de sélection (SEC1/3) couplés auxdits moyens de réception (REC1/3) et à un moyen de combinaison (VTE) pour transférer audit moyen de combinaison des signaux sélectionnés dans lesdits ensembles (Y1, Y2, Y3; U1, U2, U3; V1, V2, V3) pour permettre audit moyen de combinaison de fournir une image en noir et blanc ainsi que des versions de différentes précisions d'une image en couleurs.
